# EUROPEAN PATENT APPLICATION

(11) **EP 4 825 892 A1**
(43) Date of publication of application: **21.10.2026**
(21) Application number: 24903930.6
(22) Date of filing: 18.10.2024
(51) Int. Cl.: C08G 61/12, C08J 5/22, C25B 9/23, C25B 1/04, C25B 13/08, H01M 8/1018, H01M 8/10

(54) **SEPARATION MEMBRANE MATERIAL, MANUFACTURING METHOD THEREOF, AND SEPARATION MEMBRANE AND WATER ELECTROLYSIS APPARATUS COMPRISING SAME**

(30) Priority: 14.12.2023 KR 20230181538
(71) Applicant: SDB Corporation, Ansan-si, Gyeonggi-do 15657 (KR)
(72) Inventor: SONG, Jihyun, Incheon 21974 (KR); KO, Eunyoung, Suwon-si, Gyeonggi-do 16389 (KR); KWAK, Hyobin, Ansan-si, Gyeonggi-do 15343 (KR); KIM, Jinwoo, Siheung-si, Gyeonggi-do 15118 (KR); KIM, Yonghyun, Seongnam-si, Gyeonggi-do 13615 (KR); KIL, Doyeon, Ansan-si, Gyeonggi-do 15486 (KR)
(74) Representative: Pestalozzi, Deborah
(86) International application number: PCT/KR2024/015879
(87) International publication number: WO 2025/127363

(57) **Abstract**

The present invention relates to separation membrane material, a method for producing same, and a separation membrane and a water electrolysis apparatus comprising same. More specifically, the separation membrane material has excellent electrochemical properties such as ionic conductivity, mechanical properties, and chemical durability, and the membrane that is produced is superbly uniform.

## Description

### TECHNICAL FIELD

The present invention relates to a separation membrane material, and more specifically to a separation membrane material having excellent mechanical properties, electrochemical properties such as ion conductivity and chemical durability, and at the same time, having excellent uniformity of a manufactured membrane, a method for manufacturing the same, and a membrane and a water electrolysis apparatus including the same.

### BACKGROUND ART

As the use of fossil fuels has rapidly increased due to recent population growth, the development and supply of alternative energy sources have become urgent issues due to air pollution caused by by-products generated from the use thereof and the depletion of fossil fuels themselves.

Hydrogen energy, which is one of the alternative energies, is the cleanest alternative energy source that can replace fossil fuels. Among the methods of producing hydrogen, the water electrolysis method, which produces hydrogen through electrolysis that supplies electricity to an electrolyte utilized to ionize water and decomposes water into hydrogen and oxygen, is considered the most environmentally friendly method of producing hydrogen and is called green hydrogen.

The production methods of green hydrogen are divided into alkaline electrolysis, cation exchange membrane electrolysis, anion exchange membrane electrolysis, and solid oxide electrolysis depending on the type of electrolyte. The former two electrolysis methods are currently in the commercial technology stage, and the latter two electrolysis methods can be classified as next-generation technology stages.

Alkaline electrolysis technology is a technology that electrolyzes water using an alkaline electrolyte. It is currently the most commercialized of all electrolysis technologies and has the advantages of good durability and low equipment costs. However, when it is linked to renewable energy power with irregular output characteristics, the purity of the produced hydrogen decreases and durability and efficiency deteriorate.

Cation exchange membrane electrolysis is a type of electrolysis that uses an ion-conducting polymer electrolyte membrane as a separation membrane. It is suitable for connecting renewable energy power sources as it responds quickly to fluctuations in the power load used, and is in the early stages of commercialization. However, it has the disadvantage of high equipment costs due to the usage of precious metal electrodes.

Solid oxide electrolysis technology is a technology that produces hydrogen by electrolyzing high-temperature steam over 800 degrees Celsius using a solid oxide electrolyte. It is the most efficient technology due to its low power consumption. However, since securing high temperatures is essential, it has the limitation that it must utilize nuclear energy. In addition, there are still technical issues in securing heat-resistant materials for the stability of high-temperature operation and in assembly.

In contrast, anion exchange membrane electrolysis technology is a next-generation electrolysis technology that can improve problems that arise when linking renewable energy. It is a technology that combines the operating environment of alkaline electrolysis and the structure of cation exchange membrane electrolysis that uses an ionic polymer electrolyte membrane as a separation membrane.

In anion exchange membrane electrolysis technology, a unit cell includes an anion exchange membrane, an anode electrode formed on one side of the anion exchange membrane, and a cathode electrode formed on the other side of the anion exchange membrane. A plurality of unit cells are stacked in series to form a electrolysis stack. The electrolysis stack receives an alkaline aqueous solution (KOH or NaOH) from an electrolyte tank, and water is decomposed at the positive electrode to generate hydrogen and hydroxide ions (OH⁻). The generated hydroxide ions are transferred through an intermediate anion exchange membrane, and an electrochemical reaction occurs at the negative electrode to generate oxygen from the hydroxide ions. Each of these electrochemical reactions occurs in a catalyst on a gas diffusion layer (GDL), and the anion exchange membrane, as an intermediate electrolyte, exhibits high hydroxide ion conductivity in a wet state and separates hydrogen and oxygen generated by electrolysis due to its low gas permeability.

Unlike cation exchange membrane electrolysis, anion exchange membrane electrolysis can use inexpensive materials instead of precious metals as electrode materials, and it is very economical because it can be miniaturized. In addition, it is easy to respond to irregular renewable energy load fluctuations, and thus, it is drawing attention as a green hydrogen production method that can replace existing alkaline electrolysis, cation exchange membrane electrolysis and solid oxide electrolysis. Nevertheless, electrochemical systems based on anion exchange membranes are having difficulties in commercialization due to the low electrical performance and durability of the anion exchange membrane, which is a key chemical material. In the case of membrane materials used as conventional anion exchange membranes, there were problems such as poor mechanical properties, electrochemical properties such as ion conductivity, and chemical durability, or poor membrane uniformity.

Accordingly, there is an urgent need to develop a separation membrane material having excellent mechanical properties, electrochemical properties such as ionic conductivity and chemical durability, and at the same time, having excellent uniformity of a manufactured membrane.

### [Related Art Documents]

### [Patent Documents]

(Patent Document 1) Korea Patent Laid-Open Publication No. 10-2016-0143103 (Published on December 14, 2016)

### DISCLOSURE

### TECHNICAL PROBLEM

The present invention has been devised to solve the above-described problems, and an object of the present invention is to provide a separation membrane material having excellent mechanical properties, electrochemical properties such as ion conductivity and chemical durability, and at the same time, having excellent uniformity of a manufactured membrane, a method for manufacturing the same, and a membrane and a water electrolysis apparatus including the same.

### TECHNICAL SOLUTION

In order to solve the above-described problems, the present invention provides a method for manufacturing a separation membrane material, including preparing a polycarbazole-based anion exchange membrane material precursor by reacting a carbazole-based compound including a halogen element in a structure with an acetone-based compound including at least one fluorine group and a superacid catalyst, and manufacturing a separation membrane material including a polycarbazole-based polymer including an anion exchange group, by reacting the polycarbazole-based anion exchange membrane material precursor with an amine-based compound, wherein the polycarbazole-based polymer including an anion exchange group has a weight-average molecular weight of 120,000 to 500,000.

According to an embodiment of the present invention, the acetone-based compound including at least one fluorine group may include trifluoroacetone.

In addition, the superacid catalyst may include trifluoromethanesulfonic acid (TFSA).

In addition, the amine-based compound may include trimethylamine.

In addition, the polycarbazole-based polymer including an anion exchange group may include a compound represented by Chemical Formula 1 below:

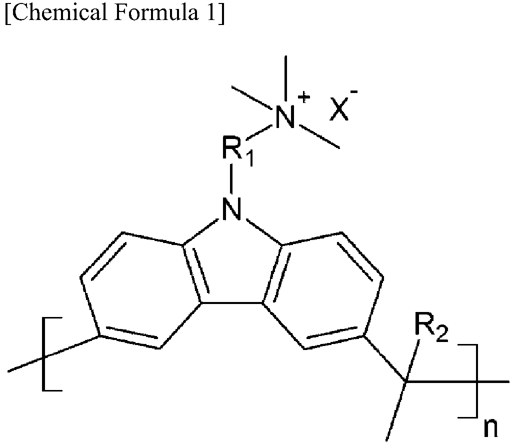

wherein in Chemical Formula 1 above,
R₁ is a C1 to C10 substituted or unsubstituted alkylene group, a C6 to C20 substituted or unsubstituted arylene group, or a C3 to C20 substituted or unsubstituted heteroarylene group, R₂ is a C1 to C10 alkyl group, a C6 to C20 aryl group, or a C3 to C20 heteroaryl group, having a substituent substituted with at least one fluorine group, X⁻ is Cl⁻, Br⁻ or OH⁻, and n is a rational number satisfying a weight-average molecular weight of 120,000 to 500,000 of the polycarbazole-based polymer including an anion exchange group.

Additionally, in the preparing a polycarbazole-based anion exchange membrane material precursor, the superacid catalyst may be used in an amount of 1 to 12 equivalents based on the total amount of a carbazole-based compound including a halogen element in a structure.

Additionally, in the preparing a polycarbazole-based anion exchange membrane material precursor, the superacid catalyst may be added dropwise at a rate of 1 to 100 mL/min.

In addition, the present invention provides a separation membrane material, including a polycarbazole-based polymer including an anion exchange group, wherein the polycarbazole-based polymer including an anion exchange group has a weight-average molecular weight of 120,000 to 500,000.

In addition, the present invention provides a separation membrane, including the separation membrane material described above.

According to an embodiment of the present invention, the separation membrane may be any one selected from the group consisting of a monolayer membrane, a reinforced membrane, a composite membrane and a reinforced composite membrane.

In addition, the separation membrane may be any one of a separation membrane for water electrolysis, a separation membrane for redox flow batteries, a separation membrane for fuel cells, a separation membrane for carbon dioxide reduction, a separation membrane for electrochemical ammonia production/decomposition, a separation membrane for electrodialysis (ED), a separation membrane for reverse electrodialysis (RED) and a separation membrane for capacitive deionization (CDI).

In addition, the separation membrane may be an anion exchange membrane for water electrolysis (AEMWE).

In addition, the present invention provides a water electrolysis apparatus, including the separation membrane described above.

### ADVANTAGEOUS EFFECTS

The separation membrane material of the present invention and the separation membrane material according to the manufacturing method thereof can manufacture a material having a high molecular weight that is suitable for use as a separation membrane, and thus, it is possible to exhibit the effects of excellent mechanical properties, electrochemical properties such as ion conductivity and chemical durability, and at the same time, the uniformity of a manufactured membrane can be excellent.

In addition, a separation membrane including the separation membrane material of the present invention and a water electrolysis apparatus including the same can be configured as an apparatus with improved reliability and performance by being able to operate stably for a longer period of time.

### DESCRIPTION OF DRAWINGS

FIG. 1 shows the NMR analysis results of a separation membrane material precursor according to one embodiment of the present invention.
FIG. 2 shows the NMR analysis results of a separation membrane material according to one embodiment of the present invention.
FIG. 3 is a graph showing changes in ionic conductivity over time of Example 1, Example 2 and Comparative Example 3 of the present invention and a commercial membrane.

### BEST MODE

Hereinafter, embodiments of the present invention will be described in detail so that those skilled in the art can easily practice the present invention. The present invention may be implemented in various different forms and is not limited to the embodiments described herein.

A separation membrane material according to the present invention is manufactured through a manufacturing method including preparing a polycarbazole-based anion exchange membrane material precursor by reacting a carbazole-based compound including a halogen element in a structure, an acetone-based compound including at least one fluoro group and a superacid catalyst, and manufacturing a separation membrane material including a polycarbazole-based polymer including an anion exchange group, by reacting the polycarbazole-based anion exchange membrane material precursor with an amine-based compound. In this case, the polycarbazole-based polymer including the anion exchange group is implemented to have a weight average molecular weight of 120,000 to 500,000.

First of all, the preparing a polycarbazole-based anion exchange membrane material precursor is described.

The preparing a polycarbazole-based anion exchange membrane material precursor is performed by reacting a carbazole-based compound including a halogen element in a structure as described above, an acetone-based compound including at least one fluoro group and a superacid catalyst.

The carbazole-based compound including a halogen element in a structure may be used without limitation as long as it is a carbazole-based compound including a halogen element in a structure that can be commonly used in the art, but it is more advantageous for achieving the object of the present invention to use a compound including a halogen element at the terminal of a hydrocarbon group bonded to a nitrogen atom in the molecular structure of carbazole.

In addition, the halogen element may be any one of chlorine (Cl), bromine (Br) and iodine (I), and preferably bromine.

The acetone-based compound including at least one fluoro group may be used without limitation as long as it is an acetone-based compound including at least one fluoro group that can be commonly used in the art, but preferably, an acetone-based compound including two or more fluoro groups may be used, and more preferably, using trifluoroacetone including three fluoro groups may be more advantageous in achieving the object of the present invention.

In addition, the superacid catalyst may be used without limitation as long as it is a catalyst exhibiting a super acid that can be commonly used in the art, but preferably, at least one of trifluoromethanesulfonic acid (TFSA) and fluorosulfonic acid may be used, and more preferably, using trifluoromethanesulfonic acid may be more advantageous in achieving the object of the present invention.

Additionally, in the preparing a polycarbazole-based anion exchange membrane material precursor, the superacid catalyst may be used in an amount of 1 to 12 equivalents based on the total amount of the carbazole-based compound including a halogen element in a structure, and preferably, 2 to 11 equivalents may be used. If the superacid catalyst is less than 1 equivalent based on the total amount of the carbazole-based compound including a halogen element in a structure, the synthesis of the polycarbazole-based anion exchange membrane material precursor may not be possible due to gelation, and if the superacid catalyst is more than 12 equivalents based on the total amount of the carbazole-based compound including a halogen element in a structure, the synthesis of the polycarbazole-based anion exchange membrane material precursor is possible, but there may be problems with extremely acidic conditions, increased waste, increased raw material costs and fume safety.

Additionally, in the preparing a polycarbazole-based anion exchange membrane material precursor, the superacid catalyst may be added dropwise at a rate of 1 to 100 mL/min, and preferably at a rate of 2 to 50 mL/min. If the dropping rate of the superacid catalyst is less than 1 mL/min, there may be a problem that the catalyst may gel during dropping and the reaction may not proceed any further, and if the dropping rate is more than 100 mL/min, the weight average molecular weight of the prepared precursor may be lowered to 100,000 or less, and it may not be possible to use it as a separation membrane material.

Next, the manufacturing a separation membrane material is described.

The manufacturing a separation membrane material is performed by reacting the polycarbazole-based anion exchange membrane material precursor with an amine-based compound as described above.

The amine-based compound may be used without limitation as long as it is an amine-based compound that can be commonly used in the art, but it is more advantageous to use trimethylamine to achieve the object of the present invention.

A polycarbazole-based polymer including an anion exchange group is prepared by reacting the polycarbazole-based anion exchange membrane material precursor with an amine-based compound, and the polycarbazole-based polymer including an anion exchange group may include a compound represented by Chemical Formula 1 below.

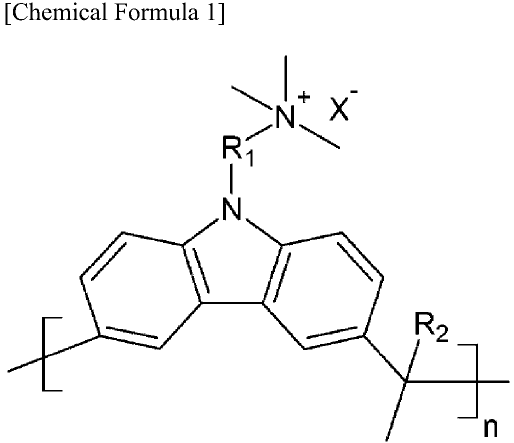

In Chemical Formula 1 above, R₁ may be a C1 to C10 substituted or unsubstituted alkylene group, a C6 to C20 substituted or unsubstituted arylene group, or a C3 to C20 substituted or unsubstituted heteroarylene group, preferably R₁ may be a C1 to C10 substituted or unsubstituted alkylene group, more preferably R₁ may be a C3 to C8 unsubstituted alkylene group, and R₂ may be a C1 to C10 substituted or unsubstituted alkyl group having a substituent substituted with at least one or more fluoro groups, a C6 to C20 substituted or unsubstituted aryl group, or a C3 to C20 substituted or unsubstituted heteroaryl group, preferably R₂ may be a C1 to C10 alkyl group having a substituent substituted with at least one or more fluoro groups, more preferably it may be a C1 to 5 alkyl group having a substituent substituted with at least one or more fluoro groups, and more preferably, it may be a C1 to C5 alkyl group having a substituent substituted with at least two or more fluoro groups, and even more preferably, it may be a C1 to C3 alkyl group having a substituent substituted with three fluoro groups, wherein X⁻ may be Cl⁻, Br⁻ or OH⁻, preferably Br⁻ or OH⁻, and wherein n may be a rational number that satisfies a weight average molecular weight of 120,000 to 500,000, and preferably 150,000 to 400,000 of a polycarbazole-based polymer including the anion exchange group. Most preferably, in Chemical Formula 1 above, R₁ may be a C6 unsubstituted alkylene group, and R₂ may be a trifluoromethyl group, which may be more advantageous in achieving the object of the present invention.

Meanwhile, the present invention provides a separation membrane material including a polycarbazole-based polymer including an anion exchange group.

The polycarbazole-based polymer including the anion exchange group may have a weight average molecular weight of 120,000 to 500,000, and preferably, the polycarbazole-based polymer including the anion exchange group may have a weight average molecular weight of 150,000 to 400,000. When the weight average molecular weight of the polycarbazole-based polymer including the anion exchange group satisfies the above range, the mechanical properties, electrochemical properties such as ion conductivity and chemical durability may be excellent, and at the same time, it is possible to exhibit an effect that the uniformity of a manufactured membrane is excellent.

In addition, according to one embodiment of the present invention, the polycarbazole-based polymer including the anion exchange group may have a number average molecular weight of 30,000 to 200,000, and preferably may have a number average molecular weight of 50,000 to 150,000. When the number average molecular weight of the polycarbazole-based polymer including the anion exchange group satisfies the above range, the mechanical properties, electrochemical properties such as ion conductivity and chemical durability are excellent, and at the same time, it is possible to exhibit an effect that the uniformity of a manufactured membrane is excellent.

Meanwhile, according to one embodiment of the present invention, the polycarbazole polymer including the anion exchange group may have a polydispersity index (PDI) of 1.2 to 9.0, and preferably, the polydispersity index may be 1.5 to 7.0. If the polydispersity index is more than 9.0, the membrane uniformity may deteriorate.

In this case, the polydispersity may be measured by calculating "weight average molecular weight / number average molecular weight."

The separation membrane material of the present invention and the manufacturing method thereof may exhibit the effects of excellent mechanical properties, electrochemical properties such as ion conductivity and chemical durability, and at the same time, excellent uniformity of the manufactured membrane.

### MODES OF THE INVENTION

The present invention will be described more specifically through the following examples, but the following examples do not limit the scope of the present invention, and should be interpreted as helping to understand the present invention.

### [Example]

### <Example 1>

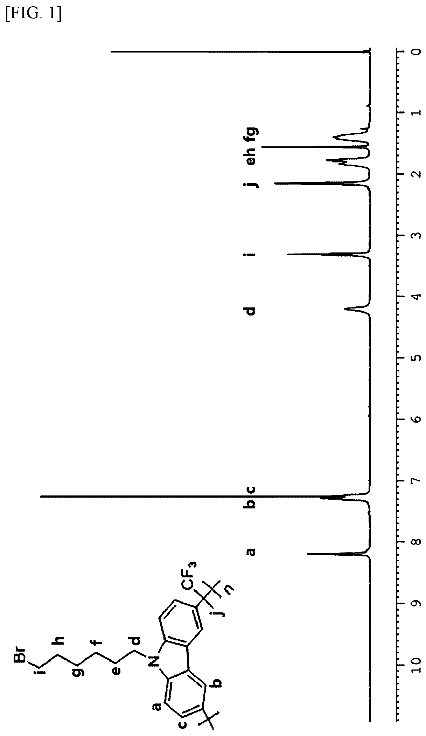

First of all, 10.0 g of 9-(6-bromohexyl)-9H-carbazole (JHChem), as a carbazole-based compound including a halogen element in a structure, was dissolved in MC, then, 10.7 g of trifluoroacetone (TFA, Thermo Fisher), as an acetone-based compound including at least one fluoro group, was mixed, and 9.5 equivalents of trifluoromethanesulfonic acid (TFSA, Thermo Fisher), as a superacid catalyst, based on the total amount of the carbazole-based compound including a halogen element in a structure, were added dropwise at a rate of 5 mL/min at -5°C or less, and then reacted at 5°C for 40 hours. After completion of the reaction, MeOH was used to precipitate the solution, and then, the solution was washed three or more times with MeOH until the pH of the washing solution became 4 or higher. The precipitate was dried to prepare a polycarbazole-based anion exchange membrane material precursor. The NMR analysis results of the prepared precursor are shown in FIG. 1.

[¹H NMR (400 MHz, CDCl₃-d₁) d (ppm) : 8.19(Hₐ), 7.30-7.23(H_{b}, H_{c}), 4.19(H_{d}), 3.3(Hᵢ), 2.15(Hⱼ), 1.83-1.73(Hₑ, Hₕ), 3.46-1.36(H_{f}, H_{g})]

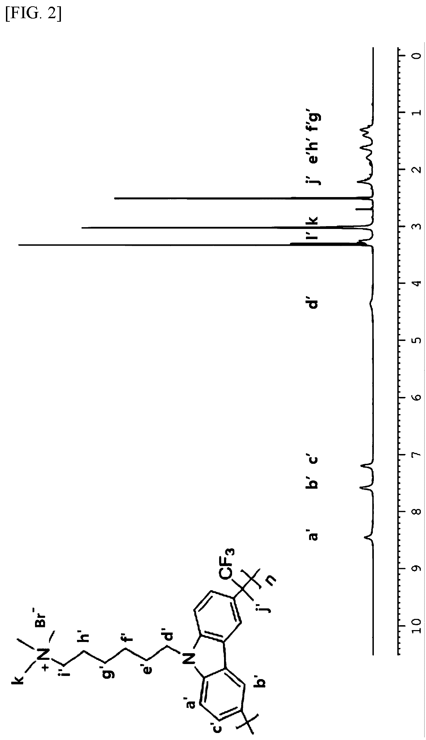

Then, 10 g of the polycarbazole-based anion exchange membrane material precursor was dissolved in NMP, and 6.3 g of trimethylamine (33% solution in ethanol, Thermo Fisher) as an amine-based compound was added and reacted at 25°C for 16 hours. By degassing using a vacuum pump, a separation membrane material including a polycarbazole-based polymer including an anion exchange group, which is a compound represented by Chemical Formula 1 below, was manufactured. The NMR analysis results of the prepared separation membrane material are shown in FIG. 2.
[¹H NMR (400 MHz, DMSO-d₆) d (ppm) : 7.59(Hₐ), 7.57(H_{b}), 7.19(H_{c}), 4.35(H_{d}), 3.28(Hᵢ), 3.02(Hₖ), 2.15(Hⱼ), 1.83-1.73(Hₑ, Hₕ), 1.42-1.36(H_{f}, H_{g})]

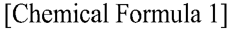

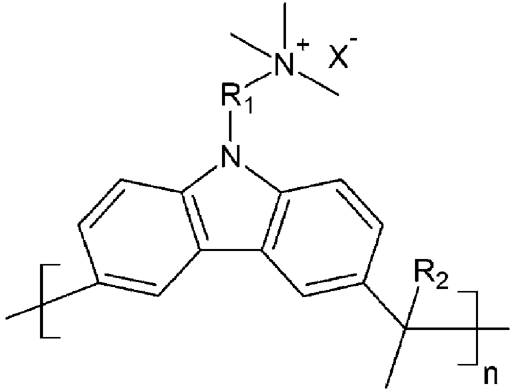

In Chemical Formula 1 above, R₁ is a C6 unsubstituted alkylene group, R₂ is a trifluoromethyl group, X is Br⁻, and n is a rational number satisfying a weight average molecular weight of 276**,**490 of the polycarbazole-based polymer including the anion exchange group.

### <Example 2>

In Example 1 above, a separation membrane material including a polycarbazole-based polymer including an anion exchange group, which is a compound represented by Chemical Formula 1 above, was manufactured in the same manner as in Example 1, except that 2.5 equivalents of trifluoromethanesulfonic acid (TFSA, Thermo Fisher) were used as a super acid catalyst based on the total amount of a carbazole-based compound including a halogen element in a structure.

### <Comparative Example 1>

In Example 1, except that 0.5 equivalents of trifluoromethanesulfonic acid (TFSA, Thermo Fisher) were used as a superacid catalyst based on the total amount of the carbazole-based compound including a halogen element in a structure, the same procedure as in Example 1 was performed to manufacture a separation membrane material including a polycarbazole-based polymer including an anion exchange group, which is a compound represented by Chemical Formula 1, but in the process for preparing a precursor, after trifluoromethanesulfonic acid was added dropwise at a rate of 5 mL/min at -5°C or less, gelation occurred during the reaction at 5°C for 40 hours, and the reaction was terminated.

### <Comparative Example 2>

In Example 1 above, except that 15 equivalents of trifluoromethanesulfonic acid (TFSA, Thermo Fisher) were used as a superacid catalyst based on the total amount of the carbazole-based compound including a halogen element in a structure, the same procedure as in Example 1 was performed to manufacture a separation membrane material including a polycarbazole-based polymer having an anion exchange group, which is a compound represented by Chemical Formula 1 above, but during the precipitation process of the polycarbazole-based anion exchange membrane material precursor, an excessive amount of fume was generated, making the operation impossible. In addition, during the washing process of a precipitate generated during the precipitation process, even after several MeOH washes, the pH of the washing solvent was 4 or less, making it difficult to remove trifluoromethanesulfonic acid remaining after the completion of the reaction, and the reaction was terminated.

### <Comparative Example 3>

In Example 1 above, the same procedure as in Example 1 was performed to manufacture a separation membrane material including a polycarbazole polymer including an anion exchange group, which is a compound represented by Chemical Formula 1 above, except that 9.5 equivalents of trifluoromethanesulfonic acid (TFSA, Thermo Fisher) as a superacid catalyst, based on the total amount of the carbazole-based compound including a halogen element in the structure, were added dropwise at a rate of 200 mL/min at -5°C or less.

### <Experimental Example>

The following physical properties were evaluated using the separation membrane material precursors, separation membrane materials and separation membranes formed into films of Examples 1, 2 and Comparative Example 3.

### 1. Analysis of molecular weights

In order to compare the molecular weights of the separation membrane materials manufactured according to Examples 1, 2 and Comparative Example 3, the molecular weights of each polycarbazole-based anion exchange membrane material precursor were analyzed using GPC. GPC used HR 3 and HR 4 columns and Waters' 2414 model as a detector. The prepared polymer was dissolved in a DMAc solution in which 0.05 M LiBr was dissolved, and injected. The analysis was performed at 25°C and a flow rate of 1.0 mL/min, and the results are summarized in Table 1 (since polycarbazole-based polymers including anion exchange groups are ionic substances and molecular weight analysis using GPC is difficult, comparative analysis was performed using precursors).

**[Table 1]**

| | Number average molecular weight (g/mol) | Weight average molecular weight (g/mol) | Polydispersity index (PDI) |
|---|---|---|---|
| Precursor of Example 1 | 113,682 | 243,281 | 2.14 |
| Precursor of Example 2 | 116,101 | 320,439 | 2.76 |
| Precursor of Comparative Example 3 | 45,508 | 73,268 | 1.61 |

As shown in Table 1 above, the precursors of Examples 1 and 2 according to the present invention had weight average molecular weights that were 3 to 4 times higher than that of Comparative Example 3, and it can be seen that they had molecular weights suitable for use as a separation membrane. This can indicate improved mechanical properties, chemical durability and stability of the material when it is applied to a water electrolysis apparatus.

### 2. Evaluation of mechanical properties

Tensile tests were performed on the separation membranes formed into film from the separation membrane materials manufactured according to Example 1, Example 2 and Comparative Example 3, and the separation membranes were substituted with hydroxide ions (OH⁻) and then measured using UTM. The results are summarized in Table 2 below.

**[Table 2]**

| | Tensile strength (MPa) |
|---|---|
| Separation membrane of Example 1 | 32 |
| Separation membrane of Example 2 | 34 |
| Separation membrane of Comparative Example 3 | 26 |

As shown in Table 2 above, it can be seen that the separation membranes of Examples 1 and 2 of the present invention exhibited high tensile strengths of 30 MPa or more, and the tensile strengths were improved by 20% to 30% or more compared to Comparative Example 3. This is a comparison of the physical properties of a material with a maximized molecular weight and a low molecular weight material, and molecular weight is a very important factor that determines the physical properties of a material, and as the molecular weight is improved, the physical durability of the separation membrane may be greatly improved.

### 3. Evaluation of chemical durability

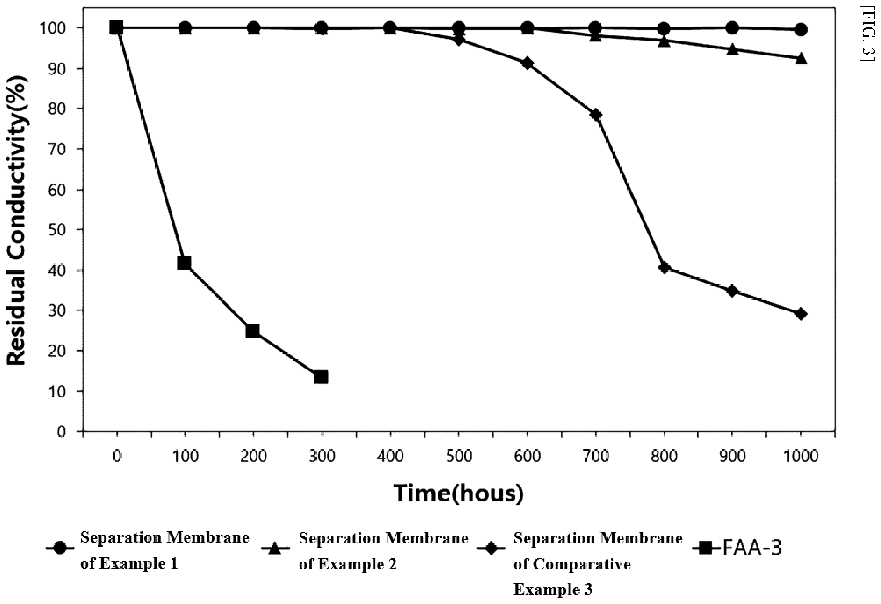

To compare chemical durability, the ionic conductivity (OH⁻ ) of a specimen was measured every 100 hours while storing in an oven at 80°C for 1,000 hours in a 1 M KOH aqueous solution, and FIG. 3 is a graph showing the residual hydroxide ion conductivity over time.

Since electrolysis is operated under very harsh conditions, its chemical stability is very important. In order to accelerate the chemical durability of the developed material, the separation membranes of Examples 1 and 2 of the present invention and FAA-3 from Pumatech, Germany, which is currently sold as an anion exchange membrane, were measured for ion conductivity every 100 hours in a 1M KOH aqueous solution at 80°C to compare their chemical durability.

As shown in FIG. 3, in the case of the commercial membrane FAA-3, a rapid decrease in performance was observed from the beginning, and after 300 hours, the ionic conductivity was reduced by more than 85% compared to the initial value. In addition, the separation membrane of Comparative Example 3 also began to exhibit a decrease in ionic conductivity after 500 hours, and after 800 hours, the ionic conductivity was reduced by more than 50% compared to the initial value. On the other hand, the separation membranes of Examples 1 and 2 of the present invention having high molecular weights maintained their initial ionic conductivity for up to 800 hours, and in particular, the separation membrane of Example 1 maintained its initial ionic conductivity for up to 1,000 hours, showing very excellent chemical durability. From the results of the chemical durability of the separation membranes of the examples and comparative example, it can be seen that the separation membrane of the present invention having a high molecular weight exhibits greatly improved durability, and when it is introduced into a water electrolysis apparatus, it may exhibit more stable performance.

Although one embodiment of the present invention has been described above, the idea of the present invention is not limited to the embodiment presented in this specification, and those skilled in the art who understand the idea of the present invention will be able to easily suggest other embodiments by adding, changing, deleting or supplementing components within the scope of the same idea, but this will also be considered to fall within the idea of the present invention.

## Claims

1. A method for manufacturing a separation membrane material, the method comprising:
preparing a polycarbazole-based anion exchange membrane material precursor by reacting a carbazole-based compound comprising a halogen element in a structure with an acetone-based compound comprising at least one fluorine group and a superacid catalyst; and
manufacturing a separation membrane material comprising a polycarbazole-based polymer comprising an anion exchange group, by reacting the polycarbazole-based anion exchange membrane material precursor with an amine-based compound,
wherein the polycarbazole-based polymer comprising an anion exchange group has a weight-average molecular weight of 120,000 to 500,000.

2. The method of claim 1, wherein the acetone-based compound comprising at least one fluorine group comprises trifluoroacetone.

3. The method of claim 1, wherein the superacid catalyst comprises trifluoromethanesulfonic acid (TFSA).

4. The method of claim 1, wherein the amine-based compound comprises trimethylamine.

5. The method of claim 1, wherein the polycarbazole-based polymer comprising an anion exchange group comprises a compound represented by Chemical Formula 1 below: 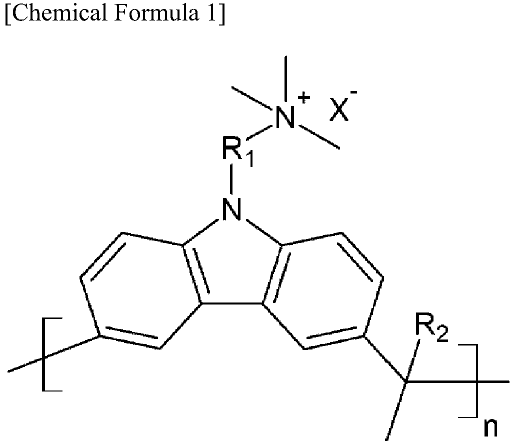 wherein in Chemical Formula 1 above,
R₁ is a C1 to C10 substituted or unsubstituted alkylene group, a C6 to C20 substituted or unsubstituted arylene group, or a C3 to C20 substituted or unsubstituted heteroarylene group,
R₂ is a C1 to C10 alkyl group, a C6 to C20 aryl group, or a C3 to C20 heteroaryl group, having a substituent substituted with at least one fluorine group,
X⁻ is Cl⁻, Br⁻ or OH⁻, and
n is a rational number satisfying a weight-average molecular weight of 120,000 to 500,000 of the polycarbazole-based polymer comprising an anion exchange group.

6. The method of claim 1, wherein in the preparing a polycarbazole-based anion exchange membrane material precursor, the superacid catalyst is used in an amount of 1 to 12 equivalents based on the total amount of a carbazole-based compound comprising a halogen element in a structure.

7. The method of claim 1, wherein in the preparing a polycarbazole-based anion exchange membrane material precursor, the superacid catalyst is added dropwise at a rate of 1 to 100 mL/min.

8. A separation membrane material, comprising a polycarbazole-based polymer comprising an anion exchange group,
wherein the polycarbazole-based polymer comprising an anion exchange group has a weight-average molecular weight of 120,000 to 500,000.

9. A separation membrane, comprising the separation membrane material of claim 8.

10. The separation membrane of claim 9, wherein the separation membrane is any one selected from the group consisting of a monolayer membrane, a reinforced membrane, a composite membrane and a reinforced composite membrane.

11. The separation membrane of claim 9, wherein the separation membrane is any one of a separation membrane for water electrolysis, a separation membrane for redox flow batteries, a separation membrane for fuel cells, a separation membrane for carbon dioxide reduction, a separation membrane for electrochemical ammonia production/decomposition, a separation membrane for electrodialysis (ED), a separation membrane for reverse electrodialysis (RED) and a separation membrane for capacitive deionization (CDI).

12. The separation membrane of claim 9, wherein the separation membrane is an anion exchange membrane for water electrolysis (AEMWE).

13. A water electrolysis apparatus, comprising the separation membrane according to any one of claims 9, 10 and 12.
